(19) Europäisches Patentamt / European Patent Office / Office européen des brevets

(11) **EP 3 269 108 B1**

(12) **FASCICULE DE BREVET EUROPEEN**

(45) Date de publication et mention de la délivrance du brevet:
**26.05.2021 Bulletin 2021/21**

(21) Numéro de dépôt: **15823363.5**

(22) Date de dépôt: **22.12.2015**

(51) Int Cl.:
**H04L 29/06** *(2006.01)*

(86) Numéro de dépôt international:
**PCT/FR2015/053720**

(87) Numéro de publication internationale:
**WO 2016/102888 (30.06.2016 Gazette 2016/26)**

(54) **PROCÉDÉ DE TRANSMISSION SÉCURISÉE D'UNE CLÉ VIRTUELLE ET MÉTHODE D'AUTHENTIFICATION D'UN TERMINAL MOBILE**

VERFAHREN ZUR GESICHERTEN ÜBERTRAGUNG EINES VIRTUELLEN SCHLÜSSELS UND VERFAHREN ZUR AUTHENTIFIZIERUNG EINES MOBILEN ENDGERÄTS

METHOD FOR SECURE TRANSMISSION OF A VIRTUAL KEY AND METHOD FOR AUTHENTICATION OF A MOBILE TERMINAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2014 FR 1403003**

(43) Date de publication de la demande:
**17.01.2018 Bulletin 2018/03**

(73) Titulaire: **Valeo Comfort and Driving Assistance 94046 Créteil Cedex (FR)**

(72) Inventeurs:
• **MENARD, Eric**
**94046 Créteil Cedex (FR)**
• **CHALOCHET, Aymeric**
**94046 Créteil Cedex (FR)**
• **MASSON, Fabienne**
**94046 Créteil Cedex (FR)**

(74) Mandataire: **Delplanque, Arnaud**
**VALEO Comfort and Driving Assistance**
**76, rue Auguste Perret**
**Z.I. Europarc**
**94046 Créteil Cedex (FR)**

(56) Documents cités:
**EP-A1- 2 743 868**

• **IFTODE L ET AL: "Smart phone: an embedded system for universal interactions", DISTRIBUTED COMPUTING SYSTEMS, 2004. PROCEEDINGS. FTDCS 2004. 10TH IEE E INTERNATIONAL WORKSHOP ON FUTURE TRENDS OF SUZHOU, CHINA 26-28 MAY 2004, PISCATAWAY, NJ, USA,IEEE, 26 mai 2004 (2004-05-26), pages 88-94, XP010711024, DOI: 10.1109/FTDCS.2004.1316598 ISBN: 978-0-7695-2118-3**
• **ALLI G ET AL: "Green Move: Towards next generation sustainable smartphone-based vehicle sharing", SUSTAINABLE INTERNET AND ICT FOR SUSTAINABILITY (SUSTAINIT), 2012, IEEE, 4 octobre 2012 (2012-10-04), pages 1-5, XP032282698, ISBN: 978-1-4673-2031-3**

## Description

DOMAINE TECHNIQUE AUQUEL SE RAPPORTE L'INVENTION

La présente invention concerne de manière générale la commande de fonctionnalités d'un véhicule automobile au moyen d'un terminal mobile.

Elle concerne plus particulièrement un procédé de transmission sécurisée d'une clé virtuelle depuis un serveur vers un terminal mobile adapté à communiquer avec le serveur.

Elle concerne également une méthode d'authentification d'un terminal mobile par une unité électronique de commande d'un véhicule automobile.

L'invention s'applique particulièrement avantageusement dans le cas où la fonctionnalité commandée est le déverrouillage des portières du véhicule ou le démarrage du véhicule.

ARRIERE-PLAN TECHNOLOGIQUE

On a proposé de commander certaines fonctionnalités d'un véhicule automobile, telles que le déverrouillage des portières du véhicule, au moyen d'un terminal mobile, par exemple un téléphone portable couramment utilisé par le propriétaire du véhicule.

Afin de ne permettre cette commande qu'aux personnes effectivement autorisées, on utilise une clé virtuelle qui est mémorisée dans le téléphone portable et dont une unité électronique de commande du véhicule vérifie la présence avant de commander le déverrouillage des portes.

De la même manière qu'il existe plusieurs clefs physiques pour chaque véhicule afin que le propriétaire du véhicule puisse facilement prêter ou louer son véhicule à un autre usager, il est nécessaire de pouvoir attribuer plusieurs clés virtuelles à plusieurs téléphones mobiles.

La méthode permettant au propriétaire de transmettre une clé virtuelle au téléphone mobile d'un autre usager consiste actuellement, pour le propriétaire, à envoyer à un serveur une demande de clé virtuelle accompagnée du numéro du téléphone mobile auquel il convient d'attribuer cette clé virtuelle.

Alors, le serveur élabore une clé virtuelle et la transmet au téléphone mobile. Pour des raisons de sécurité, cette clé virtuelle est prévue pour être mémorisée dans un élément de sécurité physique du terminal mobile, par exemple dans un domaine protégé de la carte SIM (de l'anglais « Subscriber Identity Module », ou en français « module d'identité d'abonné ») de ce téléphone mobile.

Pour pouvoir accéder à cet élément de sécurité physique, il est au préalable nécessaire de demander un accès spécial à l'opérateur du téléphone mobile.

Cette demande d'accès est contraignante pour diverses raisons. Ainsi, elle complique le processus de partage de clé virtuelle. Elle le ralentit également puisque la rapidité de réception de la clé virtuelle par l'usager dépend de la rapidité de l'opérateur à répondre à la demande d'accès à l'élément de sécurité physique. Enfin, la mise en place de cette autorisation d'accès, de manière automatique, s'avère en pratique compliquée.

Par ailleurs, certains opérateurs ou fabricants de téléphones mobiles ne souhaitant pas laisser accès au domaine protégé de leurs téléphones mobiles, le prêt du véhicule automobile peut parfois s'avérer impossible.

Le document EP 2 743 868 divulgue la protection d'une clé partagée par un niveau additionnel de cryptage en s'appuyant sur l'utilisation d'un mot de passe ou code PIN pour accéder à une application contenant des données dont la clé partagée en fait partie.

OBJET DE L'INVENTION

Afin de remédier aux inconvénients précités de l'état de la technique, la présente invention propose de mémoriser la clé virtuelle non plus dans un élément de sécurité physique du téléphone mobile, mais plutôt dans une partie logicielle sécurisée stockée dans la mémoire du téléphone.

Plus particulièrement, on propose selon l'invention un procédé de transmission sécurisée d'une clé virtuelle depuis un serveur vers un terminal mobile adapté à communiquer avec le serveur selon la revendication 1.

Ainsi, l'invention prévoit de mémoriser la clé virtuelle non plus dans un élément de sécurité physique du téléphone mobile, mais plutôt dans un environnement logiciel de cryptage.

De cette manière, grâce à l'invention, il n'est plus nécessaire de demander des autorisations d'accès aux opérateurs des téléphones mobiles pour pouvoir sécuriser la clé virtuelle, ce qui facilite le processus de partage de clés virtuelles.

Dans l'invention, l'environnement logiciel de cryptage a alors une fonction de coffre-fort virtuel, dans lequel il est possible de cacher la clé virtuelle pour la sécuriser.

D'autres caractéristiques avantageuses et non limitatives du procédé de transmission conforme à l'invention sont les suivantes :

- l'élément de sécurité est intégré dans l'application utilisateur téléchargée à l'étape b). et en ce que à l'étape d), ladite sécurisation comporte une opération de cryptage et de mémorisation, par ledit environnement logiciel de cryptage , de la clé virtuelle ;

- préalablement à l'étape d), il est prévu une étape de mise à la disposition du terminal mobile par le serveur de ledit environnement logiciel de cryptage, et une étape de téléchargement par le terminal mobile dudit environnement logiciel de cryptage , et en ce qu'à l'étape d), ladite sécurisation comporte une opération de cryptage et de mémorisation, par ledit environnement logiciel de cryptage , de la clé virtuelle ;

- ledit environnement logiciel de cryptage comporte un algorithme unique, élaboré spécifiquement pour ledit terminal mobile ;
- à l'étape a), ladite requête de certification comporte un numéro d'indentification associé audit terminal mobile ;
- la mise à disposition par le serveur dudit environnement logiciel de cryptage comprend une opération d'envoi au terminal mobile, au moyen du numéro d'indentification qui lui est associé, d'un message d'accès audit environnement logiciel de cryptage ;
- il est prévu de sécuriser, dans ledit environnement logiciel de cryptage , une application d'interface adaptée à communiquer avec une application utilisateur qui est mémorisée dans le terminal mobile , à l'extérieur dudit environnement logiciel de cryptage ;
- pour la clé d'entrée dudit environnement logiciel de cryptage il est prévu des étapes régulières de mise à jour par le serveur ;
- à l'étape b), la clé virtuelle est élaborée à partir d'une clé racine et d'au moins un paramètre de dérivation public ;
- la clé virtuelle présentant une date d'expiration prédéterminée, il est prévu après l'étape c), des étapes régulières de mise à jour de la clé virtuelle et de mise à la disposition du terminal mobile , par le serveur, de ladite clé virtuelle mise à jour.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 représente un exemple de contexte dans lequel peut-être mise en œuvre l'invention, comprenant notamment un serveur, un véhicule automobile et un terminal mobile ;
- la figure 2 représente schématiquement des composants, utiles à la compréhension de l'invention, du véhicule automobile et du terminal mobile de la figure 1 ;
- la figure 3 présente les étapes principales d'un procédé de transmission sécurisée d'une clé virtuelle depuis le serveur jusqu'au terminal mobile de la figure 1 ; et
- la figure 4 présente les étapes principales d'une méthode d'authentification du terminal mobile par le véhicule automobile de la figure 1.

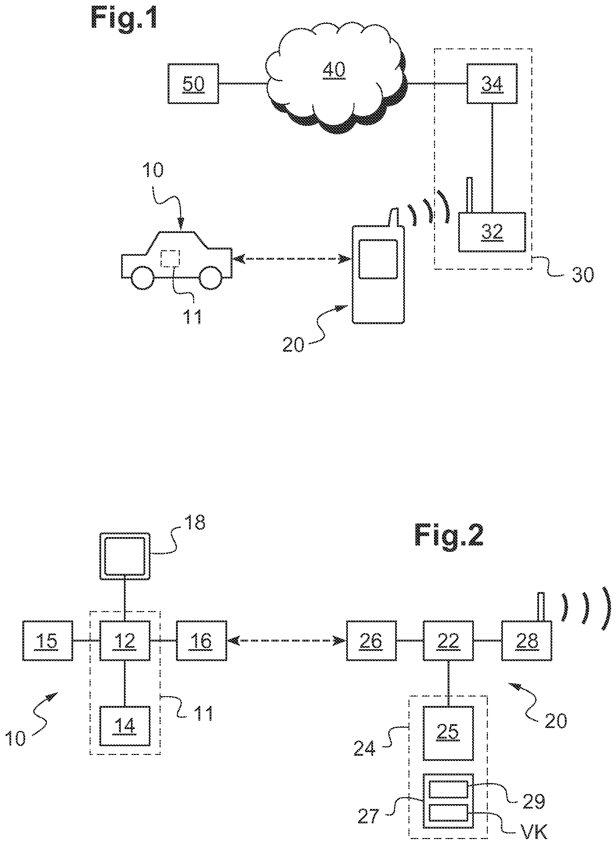

La figure 1 représente un exemple de contexte dans lequel peut être mise en œuvre l'invention.

Dans ce contexte, un véhicule automobile 10 comprend une unité électronique de commande 11 (ou ECU pour "Electronic Control Unit") qui est adaptée à commander des fonctionnalités du véhicule automobile 10 et qui peut entrer en communication, via une liaison sans fil, avec un terminal mobile 20.

Il peut s'agir d'un téléphone portable (ou téléphone cellulaire), préférentiellement de type "téléphone intelligent" ou "smartphone" selon la dénomination anglo-saxonne couramment utilisée. Il pourrait également s'agir d'une montre connectée, d'une paire de lunettes connectée...

L'unité électronique de commande 11 est adapté à communiquer avec ce terminal mobile 20 afin d'échanger des données, par exemple en vue de la commande des fonctionnalités du véhicule automobile 10 au moyen du terminal mobile 20 (une telle fonctionnalité pouvant être par exemple le déverrouillage des portes du véhicule automobile 10 ou le démarrage du moteur du véhicule automobile 10), comme expliqué plus bas.

La liaison sans fil utilisée pour communiquer entre l'unité électronique de commande 11 et le terminal mobile 20 est par exemple de type Bluetooth.

Le terminal mobile 20 est par ailleurs conçu pour se connecter à un réseau de téléphonie mobile 30 qui comprend notamment une station de base 32 en communication via une liaison radio avec le terminal mobile 20, et une passerelle 34 de connexion à un réseau public 40, par exemple le réseau Internet.

Il comporte pour cela des moyens de connexion à la station de base 32, par un protocole de téléphonie mobile de type 2G, 3G, 4G ou autre. Le terminal mobile 20 est par ailleurs équipé de moyens de connexion au réseau public via un protocole WIFI (typiquement un protocole régi par les normes du groupe IEEE 802.11).

Un serveur 50 est également connecté au réseau public 40 de sorte que le terminal mobile 20 et le serveur 50 peuvent entrer en communication et échanger des données via le réseau de téléphonie mobile 30 et le réseau public 40..

La figure 2 représente schématiquement des composants, utiles à la compréhension de l'invention, du véhicule automobile 10 et du terminal mobile 20.

Le véhicule automobile 10 comprend notamment l'unité électronique de commande 11 déjà mentionnée, un actionneur 15 (conçu ici pour permettre le déverrouillage des portes du véhicule automobile 10), un module de communication sans fil 16 et une interface utilisateur 18.

Un numéro d'identification VIN (pour "Vehicle Identification Number") est attribué au véhicule automobile 10 et est conservée dans une base de données du serveur 50.

L'unité électronique de commande 11 comprend un processeur 12 et une unité de mémorisation 14, par exemple une mémoire non-volatile réinscriptible un disque dur, ou un élement sécurisé.

L'unité de mémorisation 14 mémorise notamment des programmes d'ordinateur comprenant des instructions dont l'exécution par le processeur 12 permet la mise en œuvre par l'unité électronique de commande 11 des procédés décrits ci-dessous.

L'unité de mémorisation 14 mémorise également des données utilisées dans le cadre des procédés décrits ci-dessous, notamment une clé racine (ou clé maître) $VK_0$, utilisée comme expliqué dans la suite.

La clé racine $VK_0$ est par exemple écrite dans l'unité de mémorisation 14 lors de la fabrication de l'unité électronique de commande 11, avant montage de cette unité électronique de commande 11 dans le véhicule automobile 10.

La clé racine $VK_0$ est également mémorisée au niveau du serveur 50, en association avec le numéro d'identification VIN, ou tout autre identifiant spécifique associé à l'unité électronique attribuée au véhicule automobile 10.

Le terminal mobile 20 comprend un processeur 22, une mémoire 24 (par exemple une mémoire non-volatile réinscriptible), un module de communication sans fil 26 et un module 28 de communication sur le réseau de téléphonie mobile 30.

Le module de communication sans fil 26 du terminal mobile 20 permet d'établir une liaison sans fil (ici de type Bluetooth comme déjà indiqué) avec le module de communication sans fil 16 du véhicule automobile 10 à travers laquelle le processeur 12 de l'unité électronique de commande 11 et le processeur 22 du terminal mobile 20 peuvent échanger des données, notamment comme exposé plus loin.

Le module de communication 28 permet au terminal mobile 20 (et précisément au processeur 22 équipant ce terminal mobile 20) d'échanger comme déjà indiqué des données avec d'autres dispositifs connectés au réseau de téléphonie mobile 30 ou au réseau public 40, notamment avec le serveur 50.

La mémoire 24 mémorise notamment des applications comprenant des instructions dont l'exécution par le processeur 22 permet la mise en œuvre par le terminal mobile 20 des procédés décrits ci-dessous.

La mémoire 24 mémorise également des données utilisées dans le cadre des procédés décrits ci-dessous.

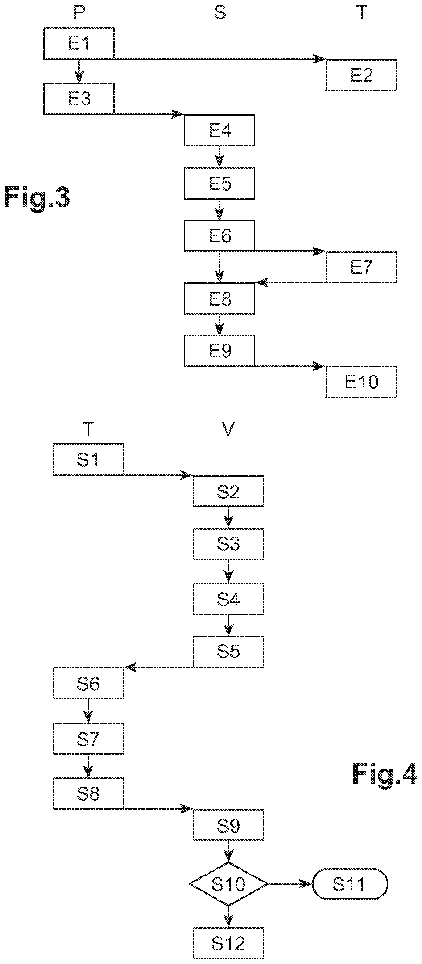

La figure 3 présente les étapes principales d'un procédé de transmission sécurisée d'une clé virtuelle VK depuis le serveur 50 vers le terminal mobile 20. Cette clé virtuelle VK peut correspondre à une clé de cryptage pour l'authentification avec le véhicule ou à cette même clé de cryptage pour l'authentification associé à un algorithme d'encryption aussi appelé cardlet. La figure 4 présente quant à elle une méthode d'authentification du terminal mobile 20 par l'unité électronique de commande 11, grâce à la clé virtuelle VK préalablement transmise par le serveur 50, qui permet ensuite au terminal mobile 20 d'accéder à un service de commande de fonctionnalités du véhicule automobile 10.

Pour plus de clarté, dans la suite de la description, on désignera par « propriétaire P » la personne qui est autorisée à transmettre à un tiers une clé d'accès au véhicule automobile 10. Il s'agira généralement du propriétaire du véhicule.

On désignera par « utilisateur » la personne à qui le propriétaire P souhaite prêter ou louer son véhicule automobile 10, pour une durée déterminée ou non.

Le terminal mobile 20 (également référencé T en figure 3) désignera le téléphone portable de l'utilisateur. Le téléphone portable du propriétaire P sera quant à lui toujours désigné comme « téléphone du propriétaire P ».

On considérera qu'avant la mise en œuvre du procédé de transmission sécurisée de la clé virtuelle VK, le terminal mobile 20 n'est pas spécifiquement préparé pour la commande de fonctionnalités du véhicule automobile 10 et ne comprend aucune donnée associée avec le véhicule automobile 10. Il peut donc s'agir par exemple du téléphone portable couramment utilisé par l'utilisateur.

On considérera en revanche que le téléphone du propriétaire P sera préparé pour la commande de fonctionnalités du véhicule automobile 10 (également référencé V en figure 4) et pour la communication avec le serveur 50 (également référencé S en figure 3). Il embarquera ainsi notamment une application utilisateur dont l'intérêt sera bien décrit dans la suite de cet exposé.

De même, avant la mise en œuvre du procédé, le terminal mobile 20 est inconnu du serveur 50, qui n'a donc connaissance d'aucune donnée associée à ce terminal mobile 20.

Dans le mode de réalisation décrit ici, l'utilisateur porte et utilise le terminal mobile 20 qui, comme décrit ci-dessus, est en communication, d'une part, avec l'unité électronique de commande 11 via une liaison sans fil (par exemple de type Bluetooth), et, d'autre part, avec le serveur 50 via une liaison radio jusqu'à la station de base 31, puis via la passerelle 34 et le réseau public 40.

Selon une un mode réalisation avantageux de l'invention, le procédé de transmission sécurisée de la clé virtuelle VK depuis le serveur 50 vers le terminal mobile 20 comporte des opérations de :

- réception par le serveur 50 d'une requête de certification du terminal mobile 20, émise par le téléphone du propriétaire P,
- mise à la disposition du terminal mobile 20 par le serveur 50 d'une application dédiée ;
- mise à la disposition du terminal mobile 20 par le serveur 50 d'un environnement logiciel de cryptage (ci-après appelé coffre-fort virtuel 27)
- téléchargement par le terminal mobile 20 du coffre-fort virtuel 27,
- mise à la disposition du terminal mobile 20, par le serveur 50, de la clé virtuelle VK, et
- téléchargement et cryptage de la clé virtuelle VK dans coffre-fort virtuel 27.

Selon un autre mode de réalisation le coffre-fort virtuelle est intégrée directement au sein de l'application dédiée, donc téléchargé en même temps que l'application dédiée.

Ces différentes opérations seront, dans la suite de cet exposé, décrites en détail, en référence à la figure 3.

A titre préliminaire, on notera que ces étapes pourront être mises en œuvre selon la chronologie représentée sur la figure 3, ou selon une chronologie légèrement modifiée.

La première étape E1 consiste, pour le propriétaire P, à demander à l'utilisateur de télécharger sur son terminal mobile 20 une application utilisateur 25.

Cette application utilisateur 25 est une application que l'utilisateur pourra télécharger sur le « magasin en ligne » associé au système d'exploitation embarqué sur son terminal mobile 20. En pratique, s'il dispose d'un iPhone®, l'utilisateur pourra télécharger cette application utilisateur sur l'Apple store® (étape E2).

Une fois téléchargée et installée sur le terminal mobile 20, cette application utilisateur 25 sera stockée dans la mémoire 24 (voir figure 2).

Le propriétaire P, qui dispose quant à lui déjà de cette application utilisateur sur son téléphone, utilise cette dernière pour émettre à destination du serveur 50 une requête de certification du terminal mobile 20 (étape E3), de manière que ce dernier puisse recevoir la clé virtuelle VK.

Pour émettre cette requête de certification, l'application utilisateur demande au propriétaire P de saisir le numéro d'identification associé au terminal mobile T de l'utilisateur (ce numéro d'identification étant par exemple le numéro de téléphone défini dans une carte amovible logée dans le terminal mobile, de type carte SIM). Une fois ce numéro d'identification saisi, la requête de certification du terminal mobile T est émise vers le serveur S.

Cette requête de certification comprend alors le numéro d'identification du terminal mobile T ainsi que le numéro d'identification VIN attribué au véhicule automobile 11.

A l'étape E4, le serveur 50 reçoit donc cette requête de certification. Il est alors programmé pour transmettre la clé virtuelle VK au terminal mobile 20, de manière sécurisée.

Pour cela, au cours d'une étape E5, le serveur S va générer (ou acquérir auprès d'un service tiers) le coffre-fort virtuel 27.

Ce coffre-fort virtuel 27 (ou « environnement logiciel de cryptage ») sera destiné à être stocké dans la mémoire 24 du terminal mobile 20. Ainsi, il est prévu pour être déployé sur un support ouvert, en dehors de l'élément de sécurité physique du terminal mobile (carte SIM, module eSE, ...). Dans ce contexte, un attaquant (ou « hacker » en anglais) pourra accéder à ce coffre-fort virtuel 27. Par conséquent, le coffre-fort virtuel 27 constituera la seule ligne de défense contre ces attaques.

Le coffre-fort virtuel 27 sera alors programmé pour fonctionner par exemple selon une technique de cryptographie en boîte blanche.

Une telle technique de cryptographie est connue de l'homme de l'art. Pour résumer, elle consiste à crypter et noyer les données et les instructions que l'on souhaite sécuriser parmi un flot d'instructions et de données dénuées d'intérêt, de manière que l'attaquant ne puisse pas retrouver les données et les instructions à sécuriser.

Pour davantage d'informations à ce sujet, on pourra se référer au document « White-box cryptography: hiding keys in software », de Brecht Wyseur, publié par exemple à l'adresse :http://www.whiteboxcrypto.com/files/2012_misc.pdf

De manière préférentielle, le coffre-fort virtuel 27 comporte un algorithme unique, élaboré spécifiquement pour le terminal mobile 20. Autrement formulé, chaque coffre-fort virtuel 27 sera unique, si bien qu'un attaquant disposant de plusieurs terminaux mobiles ne pourra pas comparer les coffres-forts virtuels mémorisés dans ces terminaux afin d'en obtenir les clés.

Chaque coffre-fort virtuel 27 comportera une clé d'entrée EK, grâce à laquelle il sera possible de crypter des données afin de pouvoir ensuite les enregistrer dans ce coffre-fort virtuel 27. La clé d'entrée EK du coffre-fort virtuel 27 sera alors stockée dans une base de données du serveur S.

La clé d'entrée EK sera transférée ou téléchargée avec le coffre-fort 27, puis elle sera remise à jour régulièrement par le serveur 50.

A l'étape E6, le serveur S met alors ce coffre-fort virtuel 27 à disposition du terminal mobile 20.

Cette étape E6 sera préférentiellement mise en œuvre de telle manière qu'elle permette de sécuriser le procédé de transmission de la clé virtuelle VK

Pour cela, dans un mode préféré de réalisation de l'invention, le serveur S commande l'envoi au terminal mobile 20 d'un message SMS (de l'anglais « Short Message Service », c'est-à-dire en français « service de messages courts ») d'accès au coffre-fort virtuel 27, dont on rappelle que le numéro de téléphone est connu du serveur S.

Ce message SMS comportera alors un lien hypertexte grâce auquel l'utilisateur pourra télécharger le coffre-fort virtuel 27, au cours d'une étape E7, via une connexion sécurisée conforme au protocole de transfert hypertexte sécurisé "https".

En variante, ce lien hypertexte pourrait être envoyé à l'utilisateur d'une autre manière, par exemple par courrier électronique ou par courrier papier (en transmettant à l'utilisateur un identifiant et un mot de passe lui permettant d'accéder au lien).

Le coffre-fort virtuel 27 pourrait également être téléchargé par le terminal mobile T en utilisant un protocole VPN (de l'anglais « virtual private network », soit en français « réseau privé virtuel »), c'est-à-dire en créant un réseau privé entre le serveur S et le terminal mobile T.

Quelle que soit la méthode utilisée, à l'issue de cette étape E7, la mémoire 24 du terminal mobile T stocke le coffre-fort virtuel 27.

Après que le serveur S a détecté que le coffre-fort virtuel 27 a été téléchargé par le terminal mobile T, il élabore la clé virtuelle VK qui permettra au terminal mobile T d'accéder au véhicule automobile 10 (étape E8).

Cette clé virtuelle VK est ici élaborée par le serveur 50 à partir d'une clé racine $VK_0$ et d'au moins un paramètre de dérivation DP public appliqué à cette clé racine $VK_0$.

Comme déjà indiqué, la clé racine $VK_0$ est stockée dans une base de données du serveur S ainsi que dans l'unité de mémorisation 14 du véhicule automobile 10.

Le ou les paramètres de dérivation DP peuvent quant à eux comprendre par exemple la date d'échéance du prêt du véhicule automobile, le numéro de téléphone du terminal mobile 20, ...

Au cours de l'étape suivante E9, le serveur S met à disposition du terminal mobile 20 la clé virtuelle VK ainsi qu'une application d'interface 29, ici le cardlet (voir figure 2).

Cette application d'interface 29 est conçue pour servir d'intermédiaire entre l'application utilisateur 25 (stockée à l'extérieur du coffre-fort virtuel 27) et l'intérieur du coffre-fort virtuel 27. Comme cela sera expliqué en détail dans la suite de cet exposé, elle permettra notamment de crypter une information fournie par l'application utilisateur 25 en fonction de la clé virtuelle VK, et de renvoyer cette information cryptée à l'application utilisateur 25.

En pratique, cette application d'interface 29 pourra être constituée par une fonction cryptographique, notée f dans la suite de cet exposé. On notera ici que cette fonction cryptographique f sera également mémorisée dans l'unité de mémorisation 14 du véhicule automobile 10.

Ici, la mise à disposition de l'application d'interface 29 et de la clé virtuelle VK consiste, pour le serveur S, à transmettre si nécessaire ces données au terminal mobile 20 , le coffre-fort virtuel 27 ayant été préalablement téléchargé. Ces application d'interface 29 et clé virtuelle VK sont envoyées par une connexion internet sécurisée, sous une forme cryptée grâce à la clé d'entrée EK du coffre-fort virtuel 27 (dont on rappelle qu'elle est stockée dans une base de données du serveur S).

En variante, cette mise à disposition pourrait, comme à l'étape E6, consister à envoyer un lien hypertexte par message SMS au terminal mobile T. Encore en variante, cette mise à disposition pourrait être opérée en utilisant un protocole différent, par exemple un protocole VPN.

A l'étape E10, le terminal mobile 20 reçoit donc l'application d'interface 29 et la clé virtuelle VK sous forme cryptée, et il les stocke dans le coffre-fort virtuel 27 de sa mémoire 24.

Une fois cette étape E10 accomplie, le terminal mobile 20 est certifié par le serveur S : il comporte une clé virtuelle VK pour accéder au véhicule automobile 10.

A ce stade, le terminal mobile 20 est donc susceptible d'être authentifié par l'unité électronique de commande 11 du véhicule automobile 10 de manière à avoir accès aux fonctionnalités du véhicule automobile 10. La fonctionnalité considérée dans la suite de cet exposé sera le déverrouillage des portières du véhicule.

Cette authentification pourra être opérée de la manière suivante, en référence à la figure 4.

Au cours d'une étape S2, l'unité électronique de commande 11 du véhicule automobile V reçoit une demande de déverrouillage des portières du véhicule. Ici, on considérera que cette demande est émise par le terminal mobile T.

Ainsi, à titre d'exemple, cette demande peut être exécutée manuellement par l'utilisateur (étape S1), à l'aide de l'application utilisateur 25 installée sur son terminal mobile T, lorsqu'une liaison Bluetooth est établie entre le terminal mobile T et l'unité électronique de commande 11.

Cette demande est formée par un ensemble de données transmises à l'unité électronique de commande 11, comportant notamment les paramètres de dérivation DP (ceux-là même qui ont permis au serveur S de calculer la clé virtuelle VK à partir de la clé racine $VK_0$).

Cette demande pourrait en variante être exécutée autrement. Elle pourrait par exemple être exécutée par l'utilisateur lorsqu'il manœuvre l'une des poignées de portière du véhicule automobile. Dans cette variante, le véhicule automobile transmettrait alors un message au terminal mobile de manière que ce dernier lui retourne les paramètres de dérivation précités.

Quoi qu'il en soit, lorsqu'elle reçoit une demande de déverrouillage des portières ainsi que les paramètres de dérivation DP, l'unité électronique de commande 11 génère un défi (en anglais "*challenge*"), par exemple un nombre aléatoire RND (étape S3).

L'unité électronique de commande 11 calcule alors à l'étape S4 une réponse RESP associée à ce défi RND par application de la fonction cryptographique f utilisant la clé virtuelle VK, ce que l'on peut écrire :

$$RESP = f(RND, VK).$$

En effet, l'unité électronique de commande 11 ayant en mémoire la clé racine $VK_0$ et ayant reçu les paramètres de dérivation DP, elle est adaptée à calculer au préalable la clé virtuelle VK.

L'unité électronique de commande 11 du véhicule automobile V émet alors à l'étape S5 le défi RND à destination du terminal mobile T, grâce à la liaison Bluetooth établie.

A l'étape S6, le terminal mobile T reçoit le défi RND.

L'application utilisateur 25 communique alors ce défi RND à l'application d'interface 29 qui calcule à son tour, à l'étape S7, la réponse attendue RESP' par application au défi RND reçu de la fonction cryptographique f utilisant la clé virtuelle VK mémorisée dans le coffre-fort virtuel 27, ce que l'on peut écrire :

$$RESP' = f(RND, VK).$$

A l'étape S8, l'application d'interface 29 renvoie à l'application utilisateur 25 cette réponse attendue RESP', de manière que cette application utilisateur 25 communique la réponse attendue RESP' à l'unité électronique de commande 11, grâce à la liaison Bluetooth.

A l'étape S9, l'unité électronique de commande 11 du véhicule automobile V reçoit donc cette réponse attendue RESP'.

Elle compare alors la réponse RESP avec la réponse attendue RESP', en vérifiant si ces deux réponses sont égales (étape S10).

Si l'égalité n'est pas vérifiée, l'unité électronique de commande 11 met fin au processus d'authentification (étape S11). En effet, cela signifie que la clé virtuelle VK utilisée par le terminal mobile 20 diffère de celle utilisée par l'unité électronique de commande 11. Un message d'erreur peut alors par exemple être affiché sur l'écran du terminal mobile 20.

Si l'égalité est vérifiée, l'unité électronique de commande 11 procède à l'étape S12, en émettant à destination de l'actionneur 15 un signal de commande de la fonctionnalité demandée, ici le déverrouillage des portières du véhicule automobile 10.

La présente invention n'est bien entendu nullement limitée au mode de réalisation décrit et représenté.

En particulier, on pourra prévoir que la clé virtuelle présente une date d'expiration prédéterminée, et que cette date d'expiration soit plus proche que la date de fin de prêt ou de location du véhicule.

Dans cette variante, il sera alors prévu de modifier régulièrement la valeur de la clé virtuelle, de manière à mieux la sécuriser encore. Ces mises à jour régulières pourront par exemple être effectuées à intervalle fixe, par exemple toutes les 24 heures.

Ainsi, il sera alors prévu des étapes régulières de mise à jour de la clé virtuelle par le serveur et de transmission de cette nouvelle clé virtuelle depuis le serveur vers le terminal mobile, par exemple au moyen d'une connexion sécurisée.

**Revendications**

1. Procédé de transmission sécurisée d'une clé virtuelle (VK) depuis un serveur (50, S) vers un terminal mobile (20, T) comprenant une mémoire (24) et adapté à communiquer avec le serveur (50, S), ledit procédé comportant des étapes de :

   a) réception par le serveur (50, S) d'une requête de certification du terminal mobile (20, T),
b) mise à la disposition et téléchargement sur le terminal mobile (20, T), par le serveur (50, S), d'une application utilisateur (25), et
c) mise à la disposition du terminal mobile (20, T), par le serveur (50, S), d'une clé virtuelle (VK), et
d) téléchargement et sécurisation de la clé virtuelle (VK) dans un élément de sécurité (27) du terminal mobile (20, T), ladite clé virtuelle (VK) étant envoyée sous forme cryptée en utilisant une connexion internet sécurisée mise en œuvre grâce à une clé d'entrée EK sécurisée,

**caractérisé en ce que** ledit élément de sécurité est formé par un environnement logiciel de cryptage (27) mettant en œuvre un coffre-fort virtuel dans lequel il est possible de cacher la clé virtuelle pour la sécuriser et fonctionnant selon une technique de cryptographie en boîte blanche, ledit coffre-fort virtuel étant destiné à être stocké dans la mémoire (24) du terminal mobile (20) en dehors de tout élément de sécurité physique.

2. Procédé de transmission selon la revendication 1, dans lequel préalablement à l'étape d), il est prévu une étape de mise à la disposition du terminal mobile (20, T) par le serveur (50, S) dudit environnement logiciel de cryptage (27), et une étape de téléchargement par le terminal mobile (20, T) dudit environnement logiciel de cryptage (27), et en ce que à l'étape d), ladite sécurisation comporte une opération de cryptage et de mémorisation, par ledit environnement logiciel de cryptage (27), de la clé virtuelle (VK), l'environnement logiciel de cryptage (27) comportant ladite clé d'entrée EK adaptée pour crypter des données, ladite clé d'entrée EK étant également stockée dans une base de donnée du serveur (50,S).

3. Procédé de transmission selon la revendication 1, dans lequel l'élément de sécurité (27) est intégré dans l'application utilisateur (25) téléchargée à l'étape b). et en ce que

   - à l'étape d), ladite sécurisation comporte une opération de cryptage et de mémorisation, par ledit environnement logiciel de cryptage (27), de la clé virtuelle (VK).

4. Procédé de transmission selon l'une des revendications précédentes, dans lequel ledit environnement logiciel de cryptage (27) comporte un algorithme unique, élaboré spécifiquement pour ledit terminal mobile (20, T).

5. Procédé de transmission selon l'une des revendications précédentes, dans lequel, à l'étape a), ladite requête de certification comporte un numéro d'indentification associé audit terminal mobile (20, T).

6. Procédé de transmission selon la revendication précédente, dans lequel la mise à disposition par le serveur (50, S) dudit environnement logiciel de cryptage (27) comprend une opération d'envoi au terminal mobile (20, T), au moyen du numéro d'indentification qui lui est associé, d'un message d'accès audit environnement logiciel de cryptage (27).

7. Procédé de transmission selon l'une des revendications précédentes, dans lequel il est prévu de sécuriser, dans ledit environnement logiciel de cryptage (27), une application d'interface (29) adaptée à communiquer avec une application utilisateur (25) qui est mémorisée dans le terminal mobile (20, T), à l'extérieur dudit environnement logiciel de cryptage (27).

8. Procédé de transmission selon l'une des revendications précédentes, dans lequel pour la clé d'entrée (EK) dudit environnement logiciel de cryptage (27) il est prévu des étapes régulières de mise à jour par le serveur (50, S).

9. Procédé de transmission selon l'une des revendications précédentes, dans lequel, à l'étape b), la clé virtuelle (VK) est élaborée à partir d'une clé racine (VKo) et d'au moins un paramètre de dérivation (DP) public.

10. Procédé de transmission selon l'une des revendications précédentes, dans lequel la clé virtuelle (VK) présentant une date d'expiration prédéterminée, il est prévu après l'étape c), des étapes régulières de mise à jour de la clé virtuelle et de mise à la disposition du terminal mobile (20, T), par le serveur (50, S), de ladite clé virtuelle (VK) mise à jour.

**Patentansprüche**

1. Verfahren zur gesicherten Übertragung eines virtuellen Schlüssels (VK) von einem Server (50, S) zu einem mobilen Endgerät (20, T), das einen Speicher (24) umfasst und geeignet ist, mit dem Server (50, S) zu kommunizieren, das Verfahren aufweisend die Schritte des:

   a) Empfangen, vom Server (50, S), einer Anfrage zur Zertifizierung des mobilen Endgeräts (20, T),
   b) Bereitstellen und Fernladen, auf das mobile Endgerät (20, T), einer Benutzeranwendung (25) durch den Server (50, S), und
   c) Bereitstellen eines virtuellen Schlüssels (VK) an das mobile Endgerät (20, T) durch den Server (50, S), und

   d) Fernladen und Sichern des virtuellen Schlüssels (VK) in einem Sicherheitselement (27) des mobilen Endgeräts (20, T), wobei der virtuelle Schlüssel (VK) unter Verwendung einer gesicherten Internetverbindung, die mithilfe eines gesicherten Eingangsschlüssels EK implementiert ist, in verschlüsselter Form gesendet wird, **dadurch gekennzeichnet, dass** das Sicherheitselement von einer Verschlüsselungssoftwareumgebung (27) gebildet ist, die einen virtuellen Safe implementiert, in welchem der virtuelle Schlüssel verborgen werden kann, um ihn zu sichern, und der gemäß einer White-Box-Kryptographietechnik funktioniert, wobei der virtuelle Safe dazu bestimmt ist, im Speicher (24) des mobilen Endgeräts (20) außerhalb jeglichen physischen Sicherheitselements gespeichert zu sein.

2. Übertragungsverfahren nach Anspruch 1, wobei vor dem Schritt d) ein Schritt des Bereitstellens der Verschlüsselungssoftwareumgebung (27) an das mobile Endgerät (20, T) durch den Server (50, S) und ein Schritt des Fernladens, durch das mobile Endgerät (20, T) der Verschlüsselungssoftwareumgebung (27) vorgesehen ist, und dadurch, dass bei Schritt d) das Sichern einen Vorgang des Verschlüsselns und Speicherns, durch die Verschlüsselungssoftwareumgebung (27), des virtuellen Schlüssels (VK) aufweist, wobei die Verschlüsselungssoftwareumgebung (27) den Eingangsschlüssel EK aufweist, der geeignet ist, Daten zu verschlüsseln, wobei der Eingangsschlüssel EK ebenfalls in einer Datenbank des Servers (50, S) gespeichert ist.

3. Übertragungsverfahren nach Anspruch 1, wobei das Sicherheitselement (27) in die Benutzeranwendung (25) integriert ist, die bei Schritt b) ferngeladen wird, und dadurch, dass

   - bei Schritt d) das Sichern einen Vorgang des Verschlüsselns und Speicherns des virtuellen Schlüssels (VK) durch die Verschlüsselungssoftwareumgebung (27) aufweist.

4. Übertragungsverfahren nach einem der vorhergehenden Ansprüche, wobei die Verschlüsselungssoftwareumgebung (27) einen einmaligen Algorithmus aufweist, der eigens für das mobile Endgerät (20, T) erstellt ist.

5. Übertragungsverfahren nach einem der vorhergehenden Ansprüche, wobei bei Schritt a) die Zertifizierungsanfrage eine Identifikationsnummer aufweist, die dem mobilen Endgerät (20, T) zugeordnet ist.

6. Übertragungsverfahren nach dem vorhergehenden Anspruch, wobei das Bereitstellen der Verschlüsselungssoftwareumgebung (27) durch den Server (50, S) einen Vorgang des Sendens einer Nachricht zum Zugriff auf die Verschlüsselungssoftwareumgebung (27) an das mobile Endgerät (20, T) mittels einer Identifikationsnummer, die ihm zugeordnet ist, umfasst.

**7.** Übertragungsverfahren nach einem der vorhergehenden Ansprüche, wobei vorgesehen ist, in der Verschlüsselungssoftwareumgebung (27) eine Schnittstellenanwendung (29) zu sichern, die geeignet ist, mit einer Benutzeranwendung (25) zu kommunizieren, die im mobilen Endgerät (20, T) außerhalb der Verschlüsselungssoftwareumgebung (27) gespeichert ist.

**8.** Übertragungsverfahren nach einem der vorhergehenden Ansprüche, wobei für den Eingangsschlüssel (EK) der Verschlüsselungssoftwareumgebung (27) regelmäßige Schritte des Aktualisierens durch den Server (50, S) vorgesehen sind.

**9.** Übertragungsverfahren nach einem der vorhergehenden Ansprüche, wobei bei Schritt b) der virtuelle Schlüssel (VK) ausgehend von einem Wurzelschlüssel ($VK_0$) und mindestens einem öffentlichen Ableitungsparameter (DP) erstellt wird.

**10.** Übertragungsverfahren nach einem der vorhergehenden Ansprüche, wobei, der virtuelle Schlüssel (VK) aufweisend ein vorbestimmtes Ablaufdatum, nach dem Schritt c) regelmäßige Schritte des Aktualisierens des virtuellen Schlüssels und des Bereitstellens des aktualisierten virtuellen Schlüssels (VK) an das mobile Endgerät (20, T) durch den Server (50, S) vorgesehen sind.

**Claims**

**1.** Method for secure transmission of a virtual key (VK) from a server (50, S) to a mobile terminal (20, T) comprising a memory (24) and suitable for communicating with the server (50, S), said method including steps of:

> a) the server (50, S) receiving a certification request for the mobile terminal (20, T),
> b) the server (50, S) providing and downloading a user application (25) to the mobile terminal (20, T), and
> c) the server (50, S) providing a virtual key (VK) to the mobile terminal (20, T), and
> d) downloading and securing the virtual key (VK) in a security element (27) of the mobile terminal (20, T), said virtual key (VK) being sent in encrypted form using a secure Internet connection implemented using a secure input key (EK),

**characterized in that** said security element is formed by an encryption software environment (27) implementing a virtual safe in which it is possible to conceal the virtual key in order to secure it, and operating using a white-box cryptography technique, said virtual safe being intended to be stored in the memory (24) of the mobile terminal (20) apart from any physical security element.

**2.** Transmission method according to Claim 1, wherein, prior to the step d), there is provided a step of the server (50, S) providing, to the mobile terminal (20, T), said encryption software environment (27), and a step of the mobile terminal (20, T) downloading said encryption software environment (27), and in that, in the step d), said securing includes an operation of encrypting and storing the virtual key (VK), via said encryption software environment (27), the encryption software environment (27) including said input key (EK) suitable for encrypting data, said input key (EK) also being stored in a database of the server (50, S).

**3.** Transmission method according to Claim 1, wherein the security element (27) is integrated into the user application (25) downloaded in the step b), and in that

> - in the step d), said securing includes an operation of encrypting and storing the virtual key (VK), via said encryption software environment (27).

**4.** Transmission method according to one of the preceding claims, wherein said encryption software environment (27) includes a unique algorithm, developed specifically for said mobile terminal (20, T).

**5.** Transmission method according to one of the preceding claims, wherein, in the step a), said certification request includes an identification number associated with said mobile terminal (20, T).

**6.** Transmission method according to the preceding claim, wherein the server (50, S) providing said encryption software environment (27) comprises an operation of sending to the mobile terminal (20, T), by means of the identification number associated therewith, a message for access to said encryption software environment (27).

**7.** Transmission method according to one of the preceding claims, wherein it is envisaged to secure, in said encryption software environment (27), an interface application (29) suitable for communicating with a user application (25) which is stored in the mobile terminal (20, T), outside said encryption software environment (27).

8.  Transmission method according to one of the preceding claims, wherein regular steps for updating by the server (50, S) are provided for the input key (EK) for said encryption software environment (27).

9.  Transmission method according to one of the preceding claims, wherein, in the step b), the virtual key (VK) is developed from a root key (VKo) and from at least one public derivation parameter (DP).

10. Transmission method according to one of the preceding claims, wherein, since the virtual key (VK) has a predetermined expiry date, there are provided, after the step c), regular steps of updating the virtual key and of providing the mobile terminal (20, T), via the server (50, S), with said updated virtual key (VK).

**Fig.1**

**Fig.2**

Fig.3

Fig.4

## RÉFÉRENCES CITÉES DANS LA DESCRIPTION

**Documents brevets cités dans la description**

- EP 2743868 A

**Littérature non-brevet citée dans la description**

- **BRECHT WYSEUR.** *White-box cryptography: hiding keys in software, http://www.whiteboxcrypto.com/files/2012_misc.pdf*